# EUROPÄISCHE PATENTSCHRIFT

(11) **EP 3 221 135 B1**
(45) Veröffentlichungstag und Bekanntmachung des Hinweises auf die Patenterteilung: **11.08.2021**
(21) Anmeldenummer: 15808323.8
(22) Anmeldetag: 17.11.2015
(51) Int. Cl.: B29D 30/00

(54) **VORRICHTUNG UND TRANSPORTEINRICHTUNG ZUR HANDHABUNG VON REIFENROHLINGEN**
DEVICE AND TRANSPORT DEVICE FOR HANDLING TYRE BLANKS
DISPOSITIF ET UNITÉ DE TRANSPORT POUR LA MANIPULATION DE PNEUS CRUS

(30) Priorität: 18.11.2014 DE 102014017148
(43) Veröffentlichungstag der Anmeldung: 27.09.2017
(73) Patentinhaber: Harburg-Freudenberger Maschinenbau GmbH, 21079 Hamburg (DE)
(72) Erfinder: MEINCKE, Rüdiger, 22547 Hamburg (DE); MARGICIOK, Wojcieck, 22143 Hamburg (DE)
(74) Vertreter: Klickow & Wetzel PartGmbB
(86) Internationale Anmeldenummer: PCT/DE2015/000557
(87) Internationale Veröffentlichungsnummer: WO 2016/078637

(56) Entgegenhaltungen:
- EP-A1- 2 025 487
- WO-A1-2013/182772
- None

## Beschreibung

Die Erfindung betrifft eine Anordnung einer Reifenheizpresse und einer Transporteinrichtung zur Handhabung von Reifenrohlingen, wobei die Transporteinrichtung zur Realisierung eines Materialflusses der Reifenrohlinge zur auf einem Hallenboden-Höhenniveau angeordneten Reifenheizpresse wenigstens eine Ladeeinrichtung zur Beschickung von Reifenheizpressen mit Reifenrohlingen und wenigstens eine Transporteinrichtung auf einem zweiten Höhenniveau (H2) relativ zum Hallenboden-Höhenniveau aufweist sowie bei der wenigstens ein Rohlingsstand in Materialflussrichtung zwischen der Transporteinrichtung und der Ladeeinrichtung auf einem ersten Höhenniveau (H1) angeordnet ist und wobei der Rohlingsstand zur Aufnahme und/oder Zwischenspeicherung wenigstens eines Reifenrohlings benachbart zur Reifenheizpresse angeordnet ist und wobei der Rohlingsstand wenigstens drei Greifhalter zur Halterung wenigstens eines Reifenrohlings aufweist und bei dem die Greifhalter den Reifenrohling an einer rotationssymmetrischen Fläche und mit einer dazu korrespondierenden Maulweite aufnehmen und wobei die wenigstens drei Greifhalter zur Halterung wenigstens eines Reifenrohlings auf einem Gestell angeordnet sind, dass die wenigstens drei Greifhalter zur Halterung wenigstens eines Reifenrohlings radial zu einer Mittenachse x-x beweglich angeordnet sind, sodass die Maulweite zur Aufnahme des Reifenrohlings variierbar ist, sodass eine Aufnahme des Reifenrohlings an einer rotationssymmetrischen Außen- oder Innenfläche unterstützt ist.

Die Herstellung eines Reifens, beispielsweise für Fahrzeuge wie Autos oder Motorräder, ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung, miteinander verbunden werden müssen.

Einer der wesentlichen Produktionsschritte zur Herstellung von Reifen ist das Vulkanisieren von Reifenrohlingen hin zu einem fertigen Reifen. Dazu wird der Reifenrohling in eine Form eingelegt, die sich innerhalb einer Reifenvulkanisiermaschine befindet und anschließend auf die materialabhängige Vulkanisiertemperatur erwärmt sowie mit einem Vulkanisierdruck innenseitig des Reifenrohlings beaufschlagt. Um die Vulkanisiertemperatur und den Vulkanisierdruck zu erreichen, wird ein geeignetes Heizmedium mit einer entsprechenden Temperatur und unter Druckbeaufschlagung in den Innenraum des Reifenrohlings eingebracht.

Nicht nur der fertige Reifen als Endprodukt des Reifenherstellungsprozesses, sondern bereits der Reifenrohling, ist ein hochkomplexes und aus vielen Halbzeugelementen bestehendes Bauteil. Infolge des vielschichtigen Aufbaus müssen die Einzelkomponenten zunächst und vor einem Vulkanisierungsvorgang zusammengefügt werden, d.h. die Reifenkomponenten werden größenrichtig vereinzelt und lage-, positions-, orientierungsgenau einer Karkasstrommel zugeführt, die sich innerhalb einer Reifenaufbaumaschine befindet. Auf diese Weise wird der Reifenrohling hergestellt und für die Vulkanisierung vorbereitet.

Viele der Reifenkomponenten liegen als bahn- und, oder bogenförmige Halbzeuge vor: Verschiedene Gummimischungen und kautschukbasierende Kompositwerkstoffe, Textilgewebe bzw. Textilkord, Stahlgürtelgewebe und kautschukummantelte Wulstkerne. Um diese bahn- und, oder bogenförmige Halbzeuge der Karkasstrommel zuzuführen, werden innerhalb einer Reifenaufbaumaschine teilweise Lagenserver verwendet.

Infolge der erheblichen Anzahl von Produktionsschritten sind Produktionsstätten in großen Hallen realisiert und umfassen für die einzelnen Produktionsschritte geeignete Maschinen, Anlagen und Handhabungsmittel. Ergänzt werden diese Produktionslinien oder Produktionszentren durch Prestream- und Downstream- Equipment zur Vorbereitung von Reifenkomponenten oder Nachbereitung beziehungsweise Verpackung der fertigen Reifen.

Typischerweise werden die Reifenrohlinge von Reifenaufbaumaschinen hergestellt und zunächst in einem Lager bevorratet. Aus diesem Lager, das praktisch als eine Art erster Pufferspeicher für den nachfolgenden Herstellungsprozess dient, werden die Reifenrohlinge dann bedarfsabhängig kontinuierlich oder diskontinuierlich entnommen und zu den Reifenheizpressen transportiert, um dort vulkanisiert zu werden.

In Produktionshallen mit einer großen Produktionskapazität stehen die Reifenheizpressen häufig reihenartig nebeneinander und die Reihen der Maschinen werden von befahrbaren Wegen getrennt. Eine Zufuhr der Reifenrohlinge erfolgt im Rahmen eines Transportsystems häufig unter Verwendung von Schienen, die in einem oberen Hallenbereich installiert sind. Entlang der Schienen sind gesteuert Transport- und Halteeinrichtungen verfahrbar. Gemäß einer Variante eines bekannten Produktionsablaufes verlaufen die Schienen oberhalb der Heizpressen und die Reifenrohlinge werden über Halteeinrichtungen, die an Ketten montiert sind, in den Bereich der Reifenheizpresse abgesenkt.

Diese häufig automatisch arbeitenden, unter der Hallendecke auf Schienen operieren Transportsysteme für Reifenrohlinge transportieren die Reifenrohlinge von einer Pufferstation zu den Reifenvulkanisiermaschinen. Dabei fahren die Transportwagen auf Schienen bis zu der jeweiligen Heizstelle und beladen den Rohlingsstand der Reifenvulkanisiermaschine. Der Rohlingsstand befindet sich auf Hallenbodenniveau und somit üblicherweise auf Höhe der Reifenvulkanisiermaschinen. Aus Sicherheitsgründen ist ein großes Sicherheits-Scannerfeld erforderlich, da schnell von oben automatisch ein Reifen mit Greifvorrichtung auf Bodenniveau abgesenkt wird. Dieses Sicherheits-Scannerfeld erfordert eine große Hallenfläche und erschwert den Zugang zur jeweiligen Reifenvulkanisiermaschine. Jede Störung muss von Hand quittiert werden und unterbricht die Versorgung von weiteren Reifenvulkanisiermaschinen.

Gemäß einer anderen Ausgestaltung der Handhabungseinrichtungen verlaufen entsprechende Transportschienen als Verfahrbasis für die Ladesysteme und Zuführeinrichtungen oberhalb der Verfahrwege angrenzend an die Reifenvulkanisiermaschinen und Produktionsstationen entsprechend der Schritte zur Reifenherstellung. Die zu vulkanisierenden Reifenrohlinge werden von Handhabungseinrichtungen positioniert, die mit Schwenkarmen und/oder anderweitig positionierbaren Armen, insbesondere Längsauslegern ausgestattet sind. Infolge der gegenüber im Bereich der Hallendecke vorgesehenen Transporteinrichtungen deutlich kürzeren Längsausleger sind Transporteinrichtungen oberhalb der Verfahrwege erheblich steifer und damit das präziser kontrollierbare Handhabungssystem, mit denen eine sehr hohe Genauigkeit erreichbar ist.

Ein Problem bei der Verwendung der Handhabungseinrichtungen basierend auf Transportschienen oberhalb der Verfahrwege angrenzend an die Reifenvulkanisiermaschinen besteht in der Bereitstellung einer ausreichenden Arbeitssicherheit. Die Reifenrohlinge müssen für eine rationelle Reifenfertigung im Arbeitsbereich vor der Reifenvulkanisiermaschine beziehungsweise der Heizpresse relativ schnell abgesenkt werden, um kurze Produktionszeiten zu realisieren. In diesem Arbeitsbereich besteht daher erhebliche Unfallgefahr und die in diesem Bereich unvorhergesehen befindlichen Mitarbeiter könnten leicht verletzt werden. Zur Erreichung einer ausreichenden Arbeitssicherheit werden deshalb visuelle Überwachungssysteme eingesetzt, die zu einer Notabschaltung der Handhabungseinrichtungen führen, wenn eine Person während der Handhabungsvorgänge den überwachten Bereich betritt. Eine derartige Notabschaltung hat jedoch eine Produktionsunterbrechung zur Folge, die häufig nur mit erheblichen Verzögerungszeiten wieder aufgehoben werden kann.

In der WO 2013/182 772 A1 wird eine Reifenheizpresse beschrieben, die eine Halteeinrichtung für die zu vulkanisierenden Reifen aufweist.

In der EP 2 025 487 wird ebenfalls eine Reifenheizpresse mit einer Halteeinrichtung für Rohreifen beschrieben.

Die US 4,472,125 beschreibt einen Belader für eine Reifenheizpresse, der es ermöglicht, einen Rohreifen in die Form der Reifenheizpresse einzusetzen.

Aufgabe der vorliegenden Erfindung ist es, eine Vorrichtung für den Materialtransport und Handhabung der einleitend genannten Art derart zu konstruieren, dass die Nachteile bekannter Lösungen wenigstens teilweise reduziert sind und eine vereinfachte Handhabung unterstützt wird.

Diese Aufgabe wird erfindungsgemäß dadurch gelöst, dass wenigstens ein Rohlingsstand mit einem Höhenabstand zu einer Hallenbodenfläche und seitlich neben den Reifenheizpressen, wie beispielsweise Heizpressen beziehungsweise Reifenvulkanisiermaschinen, positioniert ist. Dazu werden zwischen den Heizpressen und/oder Reifenvulkanisiermaschinen Halterungseinrichtungen verwendet, in die die Reifenrohlinge von den Handhabungseinrichtungen abgelegt werden können. Der Bewegungsbereich zumindest in einem unteren potentiellen Kollisionsbereich verläuft für die Handhabungseinrichtungen in diesem Fall nur oberhalb der Heizpressen. Eine Gefährdung von Bedienpersonal ist durch das unterschiedliche Höhenniveau ausgeschlossen.

Typischerweise wird jeweils eine Aufnahmeeinrichtung links und eine Aufnahmeeinrichtung rechts neben einer zugeordneten Heizpresse oder einer Reifenvulkanisiermaschine angeordnet. Eine Entnahme der Reifenrohlinge aus den Aufnahmeeinrichtungen erfolgt unter Verwendung von Greifern, die an der Reifenheizpresse angeordnet sind. Die Greifer entnehmen bedarfsabhängig die Reifenrohlinge aus den Halteeinrichtungen und setzen diese für den Vulkanisiervorgang in die Formen der Reifenheizpresse ein.

Grundsätzlich wäre ein in umgekehrter Richtung verlaufender Transportvorgang auch für die fertig vulkanisierten Reifen denkbar, diese sind nach dem Entnehmen aus den Formen aber noch sehr heiß und leicht verformbar.

Wenn sich der Rohlingsstand beispielsweise 2,5 m über dem Hallenbodenniveau befindet und gegebenenfalls auch seitlich der Heizpresse beispielsweise über einem optionalen seitlich zur Heizpresse angeordneten Schutzzaun positioniert ist, ergeben sich folgende Vorteile:
- Der Raumbedarf vor der Heizpresse wird deutlich reduziert, da das automatische Ladesystem auf einem Höhenniveau ohne Kollisionsgefahr mit einem Bedienpersonal arbeitet;
- infolge der Ausnutzung des Hallenvolumens in mehr als einem Höhenbereiches kann die Hallenbodenfläche reduziert werden, da kein oder zumindest nur ein
- größenreduziertes Sicherheits-Scannerfeld erforderlich ist;
- es können wenigstens zwei Reifenrohlinge in der Materialflussrichtung vor der Heizpresse bevorratet und damit quasi puffergespeichert werden: Ein erster Reifenrohling im Lader-Greifer und wenigstens ein zweiter Reifenrohling im Rohlingsstand;
- neben der Raumgewinnung durch die reduzierte oder entfallende Sicherheitsfeld-Scannerfeldfläche verbleit die Fläche vor der Heizpresse zur freien Verfügung für mögliche Formwechsel;
- infolge des automatischen und bedienpersonalunabhängigen Reifenrohlingshandlings durch das Ladesystem und Beschickeinrichtung erfolgt keine Produktionsunterbrechung.

In den Zeichnungen sind Ausführungsbeispiele der Erfindung schematisch dargestellt. Es zeigen:
- Fig. 1: eine perspektivische Übersicht zur Veranschaulichung der Reifenrohlingshandhabung im Rahmen eines vorzugsweise automatisch arbeitenden Ladesystems,
- Fig. 2: eine perspektivische Ansicht des erfindungsgemäßen Rohlingsstands (10) mit einem aufgenommenen Reifenrohling (200),
- Fig. 3: eine dreidimensionale Ansicht des erfindungsgemäßen Logistiksystems (70) in einem Momentanzustand des Materialflusses zum Zufuhrtransport eines Reifenrohlings (200) durch das Transportsystem (60),
- Fig. 4: eine dreidimensionale Ansicht des erfindungsgemäßen Logistiksystems (70) in einem Materialflusszeitpunkt mit in dem Rohlingsstand (10) aufgenommenen Reifenrohling (200),
- Fig. 5: eine dreidimensionale Ansicht des erfindungsgemäßen Logistiksystems (70) in einem Materialflusszeitpunkt mit in dem Ladesystem (40) aufgenommenen Reifenrohling (200),
- Fig. 6: eine dreidimensionale Ansicht des erfindungsgemäßen Logistiksystems (70) mit jeweils einem Reifenrohling (200) aufgenommen in dem Rohlingsstand (10) und in der geöffneten Reifenheizpresse (100),
- Fig. 7: eine Draufsicht auf das erfindungsgemäße Logistiksystems (70).

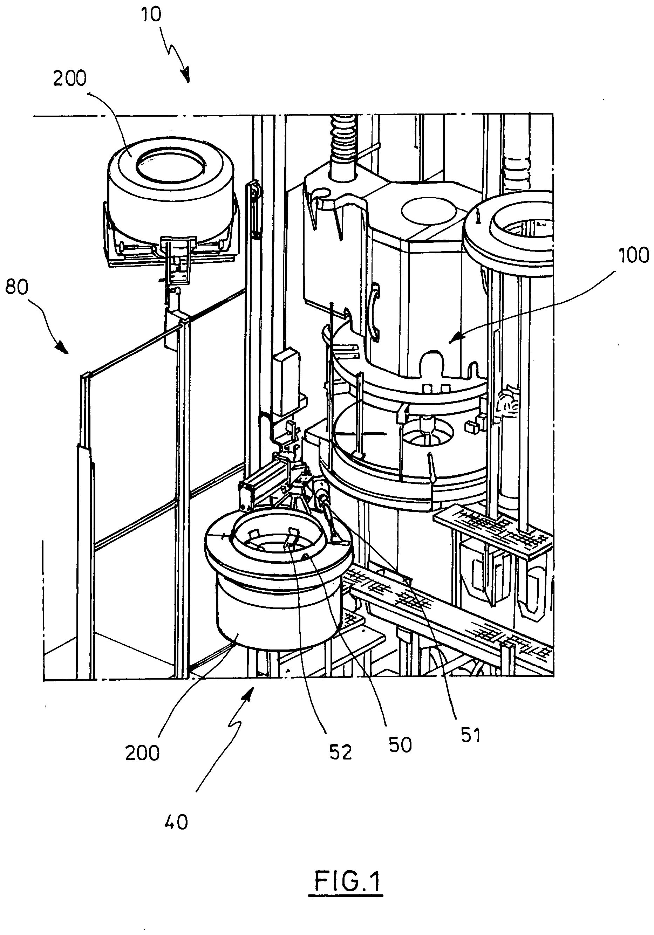

Figur 1 zeigt eine perspektivische Übersicht zur Veranschaulichung der Reifenrohlingshandhabung im Rahmen eines vorzugsweise automatisch arbeitenden Lade-systems mit dem erfindungsgemäßen Rohlingsstand (10).

Der Rohlingsstand (10) wird dabei gemäß der erfindungsgemäßen Lehre auf einem Höhenniveau oberhalb des Hallenbodens und damit auch oberhalb der zu beschickenden Reifenheizpresse (100) angeordnet. Im vorliegenden Ausführungsbeispiel gemäß Figur 1 ist der Rohlingsstand (10) oben endseitig eines seitlich zur Reifenheizpresse (100) vorgesehenen Schutzzauns (80) festgelegt.

Mit dieser gewählten Anordnung wird der Schutzzaun (80) in zweierlei Hinsicht funktionell genutzt: Der Zaun dient sowohl als Zutrittsbegrenzung für den angrenzenden und sicherheitsrelevanten Arbeitsraum des Ladesystems (40) und als Haltevorrichtung für den Rohlingsstand (10).

Die Anordnung des Rohlingsstands (10) erfolgt derart, dass er sowohl im Arbeitsbereich des Ladesystems (40) als auch im Arbeitsbereich von Handhabungseinrichtungen zur Zuführung und Beschickung des Rohlingsstands (10) mit Reifenrohlingen liegt. Das Ladesystem (40) verfügt über eine Handhabungsvorrichtung (50), welche mittels wenigstens einem Ausleger (51) an Einrichtungen zur linearen und, oder rotativen Bewegungsantrieben gekoppelt ist. Die Handhabungsvorrichtung (50) umfasst einen Greifer (52) zur Aufnahme eines Reifenrohlings (200) und ist durch die Bewegungsantriebe in linearer und rotatorischer Bewegungsrichtung derart verfahrbar, dass sowohl die Aufnahme eines Reifenrohlings (200) aus beziehungsweise von dem Rohlingsstand (10) als auch die Beschickung der Reifenheizpresse (100) mit dem Reifenrohling (200) sowie alle Bewegungspositionen zwischen diesen beiden vorzugsweise als Endlagen realisierten Raumfixpunkten unterstützt sind.

Der Greifer (52) der Handhabungsvorrichtung (50) ist vorzugsweise als Innengreifer ausgeführt und greift den Reifenrohling (200) innenseitig und, oder an der Reifenwulst. Der Rohlingsstand (10) ist vorzugsweise derart gestaltet, dass der Reifenrohling (200) bereichsweise über seine äußere Kontur gehaltert wird. Auf diese Weise kann die Aufnahme des Reifenrohlings (200) aus dem Rohlingsstand (10) durch die Handhabungsvorrichtung (50) zuverlässig und unkompliziert erfolgen dadurch, dass die Wirkflächen für die temporäre kraftschlüssige Verbindung während der Pufferposition in dem Rohlingsstand (10) und dem Handlingsprozess indem Ladesystem (40) unterschiedlich sind.

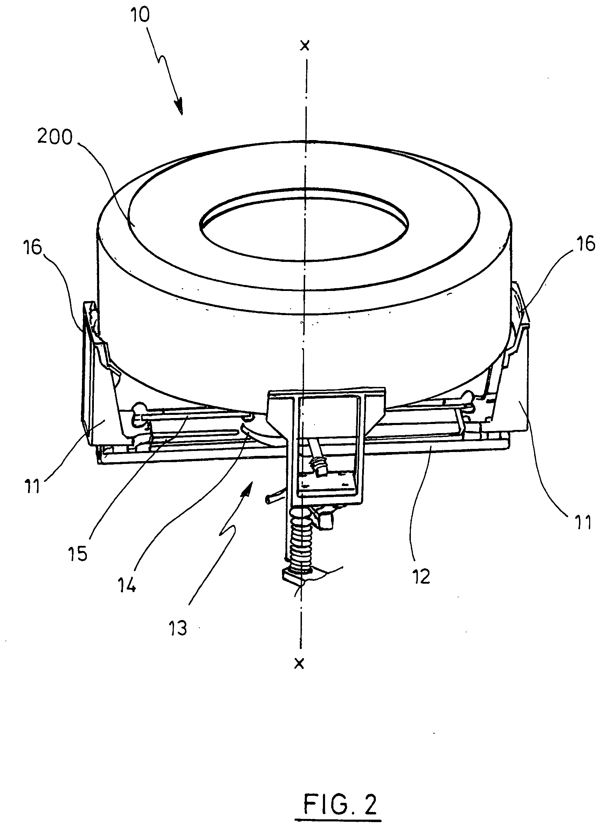

Figur 2 bildet in einer perspektivischen Ansicht den erfindungsgemäßen Rohlingsstand (10) mit einem aufgenommenen Reifenrohling (200) ab. Der Aufbau des Rohlingsstands (10) ist realisiert durch wenigstens drei Greifhalter (11), die vorzugsweise linearbeweglich in radialer Richtung zu einer Mittenachse x-x und auf einem sternförmigen Gestell (12) angeordnet sind. Um einen rotationssymmetrischen Gegenstand, zu denen auch ein Reifenrohling (200) zählt statisch bestimmt abstützen, greifen oder kraftschlüssig klemmen zu können sind exakt drei vorzugsweise gleichmäßig am Umfang verteilte Kontaktpunkte notwendig. Im vorliegenden Ausführungsbeispiel des Rohlingsstands (10) ist der Reifenrohling (200) durch vier Greifhalter (11) in stern- und gleichförmiger Anordnung aufgenommen,

Im gezeigten Beispiel ist ein Antrieb (13) in Form eines zur Mittenachse x-x zentrisch angeordneten Drehtellers(14) korrespondierend mit Zug-Schubstangen (15) vorgesehen, der motorisch oder händisch antreibbar ist und eine Linearbewegung der Greifhalter (11) bewerkstelligen kann. Auf diese Weise kann die sich durch die Greifhalter (11) aufspannende Maulweite an den jeweiligen Reifenrohlingsdurchmesser angepasst werden. Die wenigstens drei Greifhalter (11) verfügen über eine zum Reifenrohling (200) gerichtete abgestufte Wirkfläche (16), sodass die Halterung des Rohlings (200) in zwei Raumrichtungen und vorzugsweise in horizontaler und vertikaler Richtung gewährleistet ist.

Alternativ zu der in Figur 2 gezeigten Ausführungsform des Rohlingsstands (10) als Außengreifer kann dieser auch als Innengreifer realisiert werden, wobei dann der Greifer (52) der Handhabungsvorrichtung (50) des Ladesystems (40) vorzugsweise als Außengreifer ausgeführt wird.

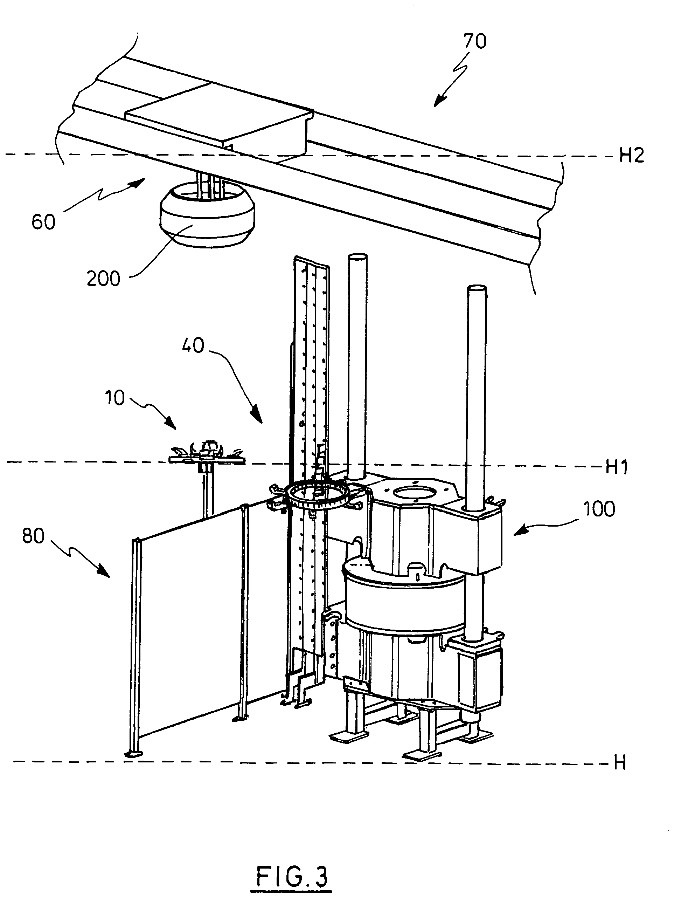

Figur 3 zeigt eine dreidimensionale Ansicht des erfindungsgemäßen Logistiksystems (70) im Zustand des Materialflusses zum Zufuhrtransport eines Reifenrohlings (200) durch das Transportsystem (60). In der gezeigten Situation hat das Transportsystem (60) einen Rohling (200) aufgenommen, der Rohlingsstand (10) befindet sich in einer Aufnahmebereitschaft dadurch, dass kein Reifenrohling (200) aufgenommen ist. Vorzugsweise ist der Rohlingsstand (10) derart ausgebildet, dass er zwei Reifenrohlinge (200) aufnehmen kann. Infolge dessen kann eine Aufnahmebereitschaft der Rohlingsstands (10) auch dann vorliegen, wenn bereits ein Reifenrohling (200) aufgenommen ist.

Zur Verdeutlichung sind die relevanten Höhenniveaulinien H, H1, H2 eingezeichnet um einen der wesentlichen Erfindungsgedanken zu illustrieren. Durch die Verlagerung von Transport- und Handhabungsfunktionen hinaus aus dem Hallenbodenniveau (H) hinein in Korridore mit einem ersten Höhenniveau (H1) und einem zweiten Höhenniveau (H2) können sowohl das für die Arbeitssicherheit erforderliche Scanner-Sicherheitsfeld als auch der Gesamtflächenbedarf für Reifenheizpressen signifikant reduziert werden.

Die Materialflusssituation der Figur 3 kann vorliegen entweder wenn sich bereits ein Reifenrohling (200) in der Reifenvulkanisiermaschine (100) befindet oder die Anlage angefahren wird.

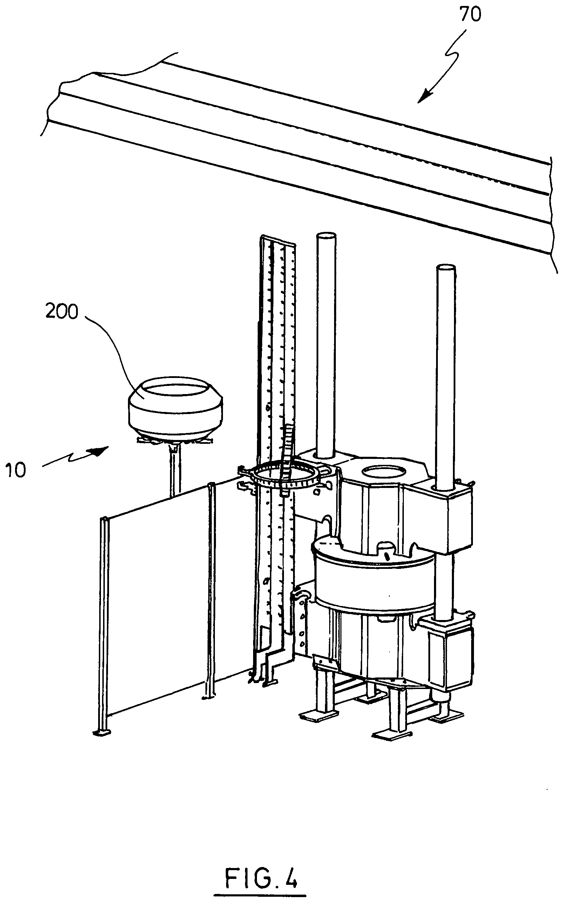

Figur 4 illustriert eine dreidimensionale Ansicht des erfindungsgemäßen Logistiksystems (70) in einem Materialflusszeitpunkt mit in dem Rohlingsstand (10) aufgenommenen Reifenrohling (200). Während dieser gezeigten Situation ist durch den Rohlingsstand ein Rohling (200) puffergespeichert, die anderen Elemente (60, 60) des Logistiksystems (70) können zeitgleich oder zeitversetzt ihre zugeordneten Handhabungs-und, oder Transportfunktionen realisieren.

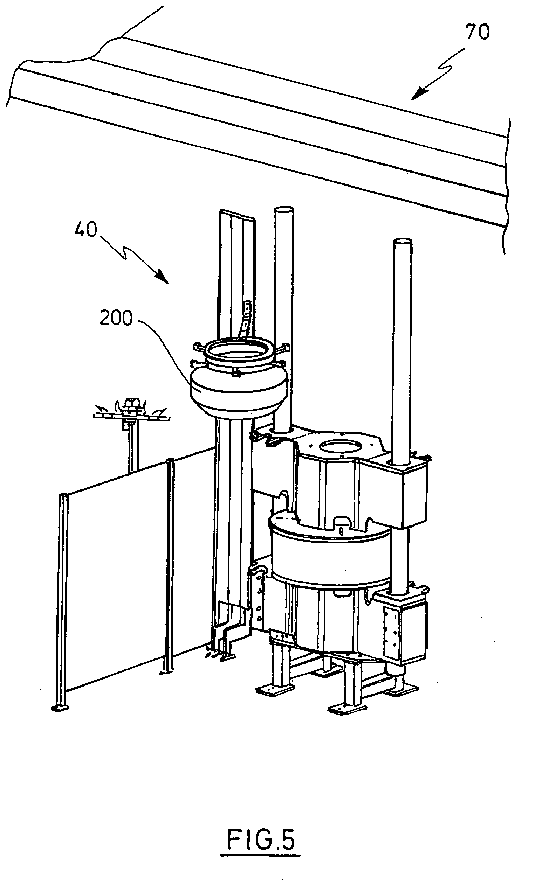

Figur 5 bildet in einer dreidimensionalen Ansicht das erfindungsgemäße Logistiksystem (70) in einem Materialflusszeitpunkt mit in dem Ladesystem (40) aufgenommenen Reifenrohling (200) ab.

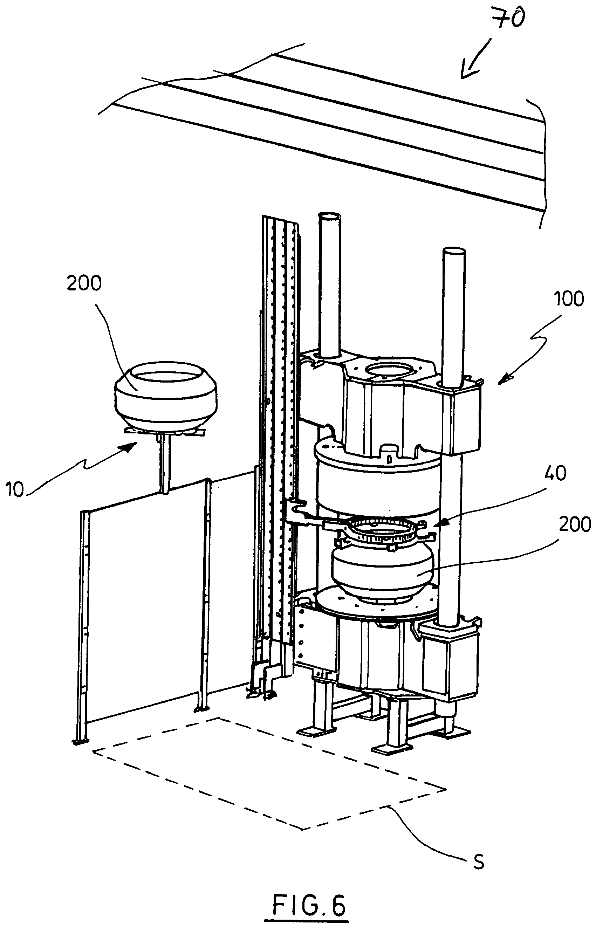

Figur 6 zeigt eine dreidimensionale Ansicht des erfindungsgemäßen Logistiksystems (70) mit jeweils einem Reifenrohling (200) aufgenommen in dem Rohlingsstand (10) und in der geöffneten Reifenheizpresse (100). Ferner qualitativ illustriert ist das Sicherheits-Scannerfeld (S), das wenigstens die durch das Ladesystem (40) überfahrbare Fläche umfassen muss.

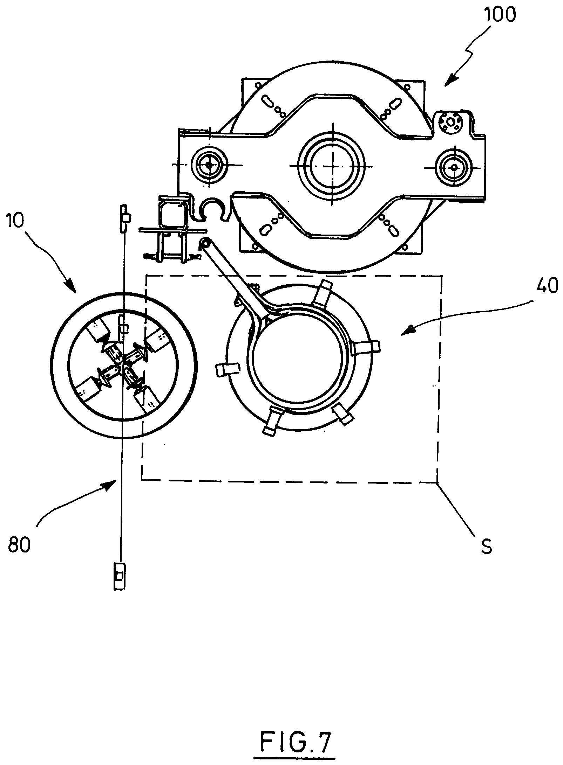

Figur 7 verdeutlicht in einer Draufsicht den Zusammenhang zwischen der Größe des Sicherheits-Scannerfeldes (S) und der Flächenprojektion der Bewegungsfreiheitsgrade des Ladesystems (40).

## Patentansprüche

1. Anordnung einer Reifenfertigungsanlage (100) und einer Transporteinrichtung (60) zur Handhabung von Reifenrohlingen, wobei die Transporteinrichtung (60) zur Realisierung eines Materialflusses von Reifenrohlingen (200) zur auf einem Hallenboden-Höhenniveau angeordneten Reifenfertigungsanlage (100) wenigstens eine Ladeeinrichtung (40) zur Beschickung der Reifenfertigungsanlage (100) mit Reifenrohlingen (200) und die wenigstens eine Transporteinrichtung (60) auf einem zweiten Höhenniveau (H2) relativ zum Hallenboden-Höhenniveau aufweist sowie bei der wenigstens ein Rohlingsstand (10) in Materialflussrichtung zwischen der Transporteinrichtung (60) und der Ladeeinrichtung (40) auf einem ersten Höhenniveau (H1) angeordnet ist und wobei der Rohlingsstand (10) zur Aufnahme und/oder Zwischenspeicherung wenigstens eines Reifenrohlings (200) benachbart zur Reifenfertigungsanlage (100) angeordnet ist und wobei der Rohlingsstand (10) wenigstens drei Greifhalter (11) zur Halterung wenigstens eines Reifenrohlings (200) aufweist und bei dem die Greifhalter (11) den Reifenrohling (200) an einer rotationssymmetrischen Fläche und mit einer dazu korrespondierenden Maulweite aufnehmen und wobei die wenigstens drei Greifhalter (11) zur Halterung wenigstens eines Reifenrohlings (200) auf einem Gestell (12) angeordnet sind die wenigstens drei Greifhalter (11) zur Halterung wenigstens eines Reifenrohlings (200) radial zu einer Mittenachse x-x beweglich angeordnet sind, sodass die Maulweite zur Aufnahme des Reifenrohlings (200) variierbar ist, sodass eine Aufnahme des Reitenrohlings (200) an einer rotationssymmetrischen Außen-oder Innenfläche unterstützt ist, **dadurch gekennzeichnet, dass** das erste Höhenniveau (H1) oberhalb des Hallenboden-Höhenniveaus (H) und das zweite Höhenniveau (H2) oberhalb des ersten Höhenniveaus (H1) liegt und dass der wenigstens eine Rohlingsstand (10) auf einem Höhenniveau H1) oberhalb des Hallenbodens (H) mit der zu beschickenden Reifenfertigungsanlage (100) derart angeordnet ist, dass der Rohlingsstand (10) sowohl im Arbeitsbereich des Ladesystems (40) als auch im Arbeitsbereich des Transportsystems (60) liegt.

2. Anordnung nach Anspruch 1, **dadurch gekennzeichnet, dass** die wenigstens drei Greifhalter (11) zur Halterung wenigstens eines Reifenrohlings (200) durch einem Greifhalter (11) zugeordneten Zug-Schubstange (15) beweglich sind.

3. Anordnung nach Anspruch 2, **dadurch gekennzeichnet, dass** der Antrieb (13) motorisch oder händisch arbeitend ausgebildet ist.

4. Anordnung nach Anspruch 1, **dadurch gekennzeichnet, dass** die wenigstens drei Greifhalter (11) zur Halterung wenigstens eines Reifenrohlings (200) jeweils eine abgestufte Wirkfläche (16) aufweisen, sodass die Halterung des Reifenrohlings (200) in wenigstens zwei Raumrichtungen unterstützt ist.

5. Anordnung nach einem der vorgehenden Ansprüche, **dadurch gekennzeichnet, dass** der Rohlingsstand (10) als Pufferspeicher wenigstens eines Reifenrohlings (200) und benachbart angeordnet zu einer Reifenfertigungsanlage (100) angeordnet ist.

6. Anordnung nach Anspruch 5, **dadurch gekennzeichnet, dass** der wenigstens eine Rohlingsstand (10) auf einem Höhenniveau (H1) oberhalb des Hallenbodens (H) mit der zu beschickenden Reifenfertigungsanlage (100) angeordnet ist, sodass ein größenreduziertes Sicherheits-Scannerfeld unterstützt ist.

7. Anordnung nach Anspruch 1, **dadurch gekennzeichnet, dass** der wenigstens eine Rohlingsstand (10) auf einem ersten Höhenniveau (H1) oberhalb des Hallenbodens (H) mit der zu beschickenden Reifenfertigungsanlage (100) derart angeordnet ist, dass der Rohlingsstand (10) von der Transporteinrichtung (60) auf einem zweiten Höhenniveau H2) oberhalb des Rohlingsstands (10) mit wenigstens einem Reifenrohling (200) beschickbar ist.

8. Anordnung nach Anspruch 1, **dadurch gekennzeichnet, dass** der wenigstens eine Rohlingsstand (10) auf einem Höhenniveau H1) oberhalb des Hallenbodens (H) an oder auf einem Schutzzaun (80) festgelegt ist.

9. Anordnung nach Anspruch 1, **dadurch gekennzeichnet, dass** durch die unterschiedlichen Höhenniveaus (H, H1, H2) der Komponenten (40, 10, 60) einer Logistikeinrichtung (70) ein flächenreduziertes Sicherheits-Scannerfeld (S) unterstützt ist.

10. Anordnung nach Anspruch 1, **dadurch gekennzeichnet, dass** durch den wenigstens einen Rohlingsstand (10) die Verfahrwege der Transporteinrichtung (60) und der Ladeeinrichtung (40) reduziert sind, sodass die Beladungszeiten reduziert und/oder die Positionierungsgenauigkeit erhöht ist.

11. Anordnung nach Anspruch 1, **dadurch gekennzeichnet, dass** die Transporteinrichtung (60) den Materialfluss automatisiert realisiert.

## Claims

1. Assembly consisting of a tyre production plant (100) and a transport installation (60) for handling tyre blanks, wherein the transport installation (60) for implementing a material flow of tyre blanks (200) to a tyre production plant (100) that is disposed at the level of a shop floor has at least one loading installation (40) for populating the tyre production plant (100) with tyre blanks (200) and the at least one transport installation (60) on a second height level (H2) relative to the shop-floor height level, and in which the at least one blank stand (10) in the direction of material flow is disposed at a first height level (H1) between the transport installation (60) and the loading installation (40), and wherein the blank stand (10) for receiving and/or temporarily storing at least one tyre blank (200) is disposed so as to be adjacent to the tyre production plant (100), and wherein the blank stand (10) for holding at least one tyre blank (200) has at least three gripping holders (11), and in which the gripping holders (11) receive the tyre blank (200) on a rotationally symmetrical face and by way of a free gap that corresponds to the latter, and wherein the at least tree gripping holders (11) for holding at least one tyre blank (200) are disposed on a frame (12) such that the at least three gripping holders (11) for holding at least one tyre blank (200) are disposed so as to be movable in a radial manner in relation to a central axis x-x, such that the free gap for receiving the tyre blank (200) is variable, such that receiving the tyre blank (200) on a rotationally symmetrical external or internal face is supported, **characterized in that** the first height level (H1) lies above the shop-floor height level (H), and the second height level (H2) lies above the first height level (H1), and **in that** the at least one blank stand (10) is disposed in such a manner on a height level (H1) above the shop floor (H) having the tyre production plant (100) to be fed that the blank stand (10) lies in the operating region of the loading system (40) as well as in the operating region of the transport system (60).

2. Assembly according to Claim 1, **characterized in that** the at least three gripping holders (11) for holding at least one tyre blank (200) are movable by way of a drive (13) that is formed by at least one rotary plate (14) and in each case one pull-push rod (15) that is assigned to a gripping holder (11).

3. Assembly according to Claim 2, **characterized in that** the drive (13) is configured so as to be operated by motive power or by hand.

4. Assembly according to Claim 1, **characterized in that** the at least three gripping holders (11) for holding at least one tyre blank (200) each have one stepped active area (16) such that the holding of the tyre blank (200) is supported in at least two spatial directions.

5. Assembly according to one of the preceding claims, **characterized in that** the blank (10) is disposed as a buffer storage of at least one tyre blank (200), and disposed so as to be adjacent to a tyre production plant (100) .

6. Assembly according to Claim 5, **characterized in that** the at least one blank stand (10) is disposed on a height level (H1) above the shop floor (H) having the tyre production plant (100) to be fed, such that a size-reduced safety scanner field is supported.

7. Assembly according to Claim 1, **characterized in that** the at least one blank stand (10) is disposed in such a manner on a height level (H1) above the shop floor (H) having the tyre production plant (100) to be fed that the blank stand (10) is feedable by a transport installation (60) on a second height level (H2) above the blank stand (10) having at least one tyre blank (200).

8. Assembly according to Claim 1, **characterized in that** the at least one blank stand (10) on a height level (H1) above the shop floor (H) is secured on or on top of a safety fence (80).

9. Assembly according to Claim 1, **characterized in that** a size-reduced safety scanner field (S) is supported by the dissimilar height levels (H, H1, H2) of the components (40, 10, 60) of a logistics installation (70).

10. Assembly according to Claim 1, **characterized in that** the displacement paths of the transport installation (60) and of the loading installation (40) are reduced by the at least one blank stand (10), such that the loading times are reduced and/or the positioning accuracy is enhanced.

11. Assembly according to Claim 1, **characterized in that** the transport installations (60) implements the material flow in an automated manner.

## Revendications

1. Agencement d'une unité de production de pneus (100) et d'un appareil de transport (60) pour la manipulation d'ébauches de pneus, dans lequel l'appareil de transport (60) comprend, pour la réalisation d'un flux de matière d'ébauches de pneus (200) vers l'unité de production de pneus (100) agencée à un niveau de hauteur du plancher de l'atelier, au moins un appareil de chargement (40) pour l'alimentation de l'unité de production de pneus (100) avec des ébauches de pneus (200) et l'au moins un appareil de transport (60) à un deuxième niveau de hauteur (H2) par rapport au niveau de hauteur du plancher de l'atelier, et dans lequel au moins un portoir d'ébauche (10) est agencé dans la direction du flux de matière entre l'appareil de transport (60) et l'appareil de chargement (40) à un premier niveau de hauteur (H1), et dans lequel le portoir d'ébauche (10) est agencé pour la réception et/ou le stockage intermédiaire d'au moins une ébauche de pneu (200) en position voisine de l'unité de production de pneus (100), et dans lequel le portoir d'ébauche (10) comprend au moins trois supports de préhension (11) pour le support d'au moins une ébauche de pneu (200), et dans lequel les supports de préhension (11) reçoivent l'ébauche de pneu (200) au niveau d'une surface symétrique par rotation et avec une largeur de mâchoire correspondant à celle-ci, et dans lequel les au moins trois supports de préhension (11) pour le support d'au moins une ébauche de pneu (200) sont agencés sur un châssis (12), dans lequel les au moins trois supports de préhension (11) pour le support d'au moins une ébauche de pneu (200) sont agencés de manière mobile radialement par rapport à un axe médian x-x, de telle sorte que la largeur de mâchoire pour la réception de l'ébauche de pneu (200) soit variable, de telle sorte qu'une réception de l'ébauche de pneu (200) sur une surface extérieure ou intérieure symétrique par rotation soit favorisée, **caractérisé en ce que** le premier niveau de hauteur (H1) se situe au-dessus du niveau de hauteur du plancher de l'atelier (H) et le deuxième niveau de hauteur (H2) se situe au-dessus du premier niveau de hauteur (H1), et **en ce que** l'au moins un portoir d'ébauche (10) est agencé à un niveau de hauteur (H1) au-dessus du plancher de l'atelier (H) avec l'unité de production de pneus (100) à alimenter, de telle sorte que le portoir d'ébauche (10) se situe aussi bien dans la zone de travail du système de chargement (40) que dans la zone de travail du système de transport (60).

2. Agencement selon la revendication 1, **caractérisé en ce que** les au moins trois supports de préhension (11) pour le support d'au moins une ébauche de pneu (200) sont mobiles par un entraînement (13) formé par au moins un plateau tournant (14) et une bielle de traction-poussée (15) associée à chaque fois à un support de préhension (11).

3. Agencement selon la revendication 2, **caractérisé en ce que** l'entraînement (13) est configuré pour fonctionner de manière motorisée ou manuelle.

4. Agencement selon la revendication 1, **caractérisé en ce que** les au moins trois supports de préhension (11) pour le support d'au moins une ébauche de pneu (200) comprennent chacun une surface fonctionnelle échelonnée (16), de telle sorte que le support de l'ébauche de pneu (200) dans au moins deux directions de l'espace soit favorisé.

5. Agencement selon l'une quelconque des revendications précédentes, **caractérisé en ce que** le portoir d'ébauche (10) est agencé en tant que réservoir d'accumulation d'au moins une ébauche de pneu (200) et agencé en position voisine d'une unité de production de pneus (100).

6. Agencement selon la revendication 5, **caractérisé en ce que** l'au moins un portoir d'ébauche (10) est agencé à un niveau de hauteur (H1) au-dessus du plancher de l'atelier (H) avec l'unité de production de pneus (100) à alimenter, de telle sorte qu'un champ de scanner de sécurité de taille réduite soit favorisé.

7. Agencement selon la revendication 1, **caractérisé en ce que** l'au moins un portoir d'ébauche (10) est agencé à un premier niveau de hauteur (H1) au-dessus du plancher de l'atelier (H) avec l'unité de production de pneus (100) à alimenter, de telle sorte que le portoir d'ébauche (10) puisse être alimenté par l'appareil de transport (60) à un deuxième niveau de hauteur (H2) au-dessus du portoir d'ébauche (10) avec au moins une ébauche de pneu (200).

8. Agencement selon la revendication 1, **caractérisé en ce que** l'au moins un portoir d'ébauche (10) est fixé à un niveau de hauteur (H1) au-dessus du plancher de l'atelier (H) au niveau de ou sur une clôture de protection (80).

9. Agencement selon la revendication 1, **caractérisé en ce qu'**un champ de scanner de sécurité (S) de surface réduite est favorisé par les différents niveaux de hauteur (H, H1, H2) des composants (40, 10, 60) d'un appareil de logistique (70).

10. Agencement selon la revendication 1, **caractérisé en ce que** les trajectoires de déplacement de l'appareil de transport (60) et de l'appareil de chargement (40) sont réduites par l'au moins un portoir d'ébauche (10), de telle sorte que les temps de chargement sont réduits et/ou la précision de positionnement est augmentée.

11. Agencement selon la revendication 1, **caractérisé en ce que** l'appareil de transport (60) réalise automatiquement le flux de matière.
